# EUROPEAN PATENT APPLICATION

(11) **EP 4 122 982 A1**
(43) Date of publication of application: **25.01.2023**
(21) Application number: 21772320.4
(22) Date of filing: 16.03.2021
(51) Int. Cl.: C08K 5/3445, C08L 61/14, C08J 5/24, C08K 3/36

(54) **RESIN COMPOSITION, PRE-PREG, MOLDED ARTICLE, AND PRE-PREG MANUFACTURING METHOD**

(30) Priority: 19.03.2020 JP 2020048729
(71) Applicant: Mitsubishi Chemical Corporation, Chiyoda-ku Tokyo 100-8251 (JP)
(72) Inventor: NOHARA, Atsushi, Tokyo 100-8251 (JP)
(74) Representative: Hoffmann Eitle
(86) International application number: PCT/JP2021/010510
(87) International publication number: WO 2021/187453

(57) **Abstract**

A resin composition having favorable heat stability while capable of primary curing at 140°C or lower, and having excellent heat resistance after curing, and a pre-preg having excellent heat resistance while a molded product after molding maintains mechanical characteristics are provided. The resin composition of the present invention comprises a constituent element (A): a cyanate ester resin, a constituent element (B): an imidazole compound, and a constituent element (C): silica, in which an average particle size of the silica is 0.4 µm or less. The pre-preg of the present invention comprises carbon fibers, and the resin composition of the present invention.

## Description

### [Technical Field]

The present invention relates to a resin composition, a pre-preg, and a molded product which are particularly suitable for heat resistant usages, and a pre-preg manufacturing method.

Priority is claimed on Japanese Patent Application No. 2020-048729, filed March 19, 2020, the content of which is incorporated herein by reference.

### [Background Art]

An epoxy resin is widely used as a thermosetting resin because of its mechanical characteristics. In particular, an epoxy resin is often used as a matrix resin of a fiber-reinforced composite material in which reinforcing fibers such as carbon fibers and glass fibers are used.

However, when an epoxy resin is used, heat resistance may be insufficient in some cases, which limits application usage. Therefore, it is known that a cyanate ester resin is used to improve heat resistance (Patent Document 1). Although the cyanate ester resin exhibits extremely high heat resistance, a curing reaction starts from a high temperature of 200°C or higher with the cyanate ester resin alone. Therefore, various catalysts are often added to lower a reaction start temperature.

A fiber-reinforced composite material is molded by laminating a pre-preg, which is an intermediate material comprised carbon fibers and a matrix resin, attaching it to a mold, and then applying heat and pressure. Because molds and auxiliary materials having heat resistance of 180°C or higher are very expensive, a method in which maximum heat resistance is exhibited by heating to 180°C or higher after primary curing at a relatively low temperature of 140°C or less and demolding is used (Patent Document 2). In this case, the pre-preg is required to be capable of primary curing to a state in which it can be demolded at 140°C or lower.

It is required to use a highly reactive catalyst in order to obtain enough cure degree that enables demolding at a relatively low temperature of 140°C or lower. For example, as a curing reaction catalyst of a cyanate ester resin, a metal catalyst, a basic catalyst, and an acidic catalyst are generally used.

Patent Document 3 discloses a composition in which a metallocene derivative is compounded into a cyanate ester resin, thereby capable of curing at 200°C or lower and having favorable storage stability.

Patent Document 4 discloses a cyanate ester resin composition capable of primary curing at 120°C using an organometallic complex as a catalyst.

Patent Document 5 discloses that, by adding a curing agent or a curing accelerator, silica fine particles, and core-shell rubber particles to the cyanate ester resin in a specific compounding ratio, the resin flow at the time of heat-curing can be prevented, the resin defects and the non-uniformity of the thickness are eliminated, and the workability is excellent, even without adding a thermoplastic resin for viscosity adjustment.

### [Citation List]

### [Patent Documents]

[Patent Document 1]
   Japanese Unexamined Patent Application, First Publication No. H5-287168
[Patent Document 2]
   Japanese Patent No. 5367724
[Patent Document 3]
   Japanese Unexamined Patent Application, First Publication No. 2015-38167
[Patent Document 4]
   Japanese Unexamined Patent Application, First Publication No. 2006-70115
[Patent Document 5]
   Japanese Patent No. 6354884

### [Summary of Invention]

### [Technical Problem]

However, the highly reactive catalyst decreases storage stability at room temperature, which may cause life to expire when products of the same manufacturing lot are used for a long period of time.

Furthermore, when the cyanate ester resin is cured using imidazole, it is advantageous in terms of storage stability and heat resistance as compared to when using, for example, dicyandiamide, but there was a problem of a deterioration in mechanical characteristics due to a cured product becoming brittle.

One of objects of the present invention is to provide a resin composition having favorable heat stability while capable of primary curing at 140°C or lower, and having excellent heat resistance after curing, and a pre-preg having excellent heat resistance while a molded product after molding maintains mechanical characteristics.

### [Solution to Problem]

As a result of diligent studies to achieve the above-mentioned object, the inventors of the present invention found that the above-mentioned object can be achieved by using a cyanate ester resin, an imidazole compound, and silica in combination, and thereby completed the present invention.

That is, the gist of the present invention lies in the following [1] to [20].
[1] A resin composition comprising:
   the following constituent element (A); constituent element (B); and constituent element (C),
   wherein an average particle size of silica of the constituent element (C) is 0.4 µm or less,
   the constituent element (A): a cyanate ester resin,
   the constituent element (B): an imidazole compound, and
   the constituent element (C): silica.
[2] The resin composition according to [1], wherein the constituent element (A) comprises a cyanate ester resin having two or more cyanate groups in one molecule.
[3] The resin composition according to [1] or [2], wherein the constituent element (B) comprises an imidazole compound having a substituent having a triazine ring.
[4] The resin composition according to any one of [1] to [3], wherein the constituent element (C) comprises hydrophilic silica.
[5] The resin composition according to any one of [1] to [4], wherein a content of the constituent element (B) is 0.7 to 1 part by mass with respect to 100 parts by mass of the constituent element (A).
[6] The resin composition according to any one of [1] to [5], wherein a content of the constituent element (C) is 0.5 to 5 parts by mass with respect to 100 parts by mass of the constituent element (A).
[7] The resin composition according to any one of [1] to [6], wherein the constituent element (A) comprises a novolac-type cyanate ester resin.
[8] The resin composition according to any one of [1] to [7], wherein a specific surface area of the constituent element (C) is 200 m²/g or more.
[9] The resin composition according to any one of [1] to [8], wherein an E'onset value of DMA measured according to ASTM D7028 is 370°C or higher.
[10] The resin composition according to any one of [1] to [9], wherein the constituent element (C) comprises fumed silica.
[11] The resin composition according to any one of [1] to [10], wherein the constituent element (B) comprises 2,4-diamino-6-[2'-methylimidazolyl-(1')]-ethyl-s-triazine, or an isocyanuric acid addition salt of 2,4-diamino-6-[2'-methylimidazolyl-(1')]-ethyl-s-triazine.
[12] The resin composition according to any one of [1] to [11], wherein the constituent element (C) comprises hexamethyldisilazane-treated silica.
[13] The resin composition according to any one of [1] to [12], wherein the constituent element (C) comprises silica having an average particle size of 0.001 µm or more.
[14] The resin composition according to any one of [1] to [13], wherein a mass ratio of the constituent element (B) and the constituent element (C) (mass of constituent element (C)/mass of constituent element (B)) is 0.5 to 10.
[15] A pre-preg comprising:
   carbon fibers; and
   the resin composition according to any one of [1] to [14].
[16] A molded article comprising:
   carbon fibers; and
   a cured product of the resin composition according to any one of [1] to [14].
[17] A method for manufacturing a pre-preg, the method comprising:
   impregnating a carbon fiber substrate with a resin composition,
   wherein the resin composition comprises the following constituent element (A), constituent element (B), and constituent element (C), and
   an average particle size of silica of the constituent element (C) is 0.4 µm or less,
   the constituent element (A): a cyanate ester resin,
   the constituent element (B): an imidazole compound, and
   the constituent element (C): silica.
[18] The pre-preg manufacturing method according to [17], wherein the constituent element (B) comprises an imidazole compound having a substituent having a triazine ring.
[19] A resin composition comprising:
   the following constituent element (A); constituent element (B); and constituent element (C),
   wherein a specific surface area of silica of the constituent element (C) is 200 m²/g or more,
   the constituent element (A): a cyanate ester resin,
   the constituent element (B): an imidazole compound, and
   the constituent element (C): silica.
[20] The resin composition according to [19], wherein the specific surface area of the silica of the constituent element (C) is 500 m²/g or less.

### [Advantageous Effects of Invention]

The resin composition of the present invention has favorable heat stability while capable of primary curing at 140°C or lower, and has excellent heat resistance after curing.

The pre-preg of the present invention has excellent heat resistance while a molded product after molding maintains mechanical characteristics.

### [Description of Embodiments]

The definitions of the following terms apply throughout the present specification and claims.

A "cyanate ester resin" refers to a compound having a cyanate group in a molecule.

### <Resin composition>

A resin composition comprises the following constituent element (A), constituent element (B), and constituent element (C).
Constituent element (A): a cyanate ester resin,
Constituent element (B): an imidazole compound, and
Constituent element (C): silica.

With increasing the solubility of the imidazole compound in the cyanate ester resin by the silica, in molding process, primary curing at 140°C or lower becomes to be possible, thereby the curability in the primary curing can become favorable. Specifically, the curability means the ease of curing, the state of curing, and the ease of demolding a cured product.

Furthermore, because silica is an inorganic substance and has high heat resistance, the heat resistance of 370°C or higher can be imparted to the cured product without decomposition by performing secondary curing at about 250°C.

An E'onset value of DMA measured according to ASTM D7028 of the resin composition is preferably 350°C or higher and more preferably 370°C or higher from the viewpoint of heat resistance. When the cyanate ester resin is used, the E'onset value is usually 600°C or lower. For example, 350°C to 600°C is preferable, and 370°C to 600°C is more preferable.

The viscosity of the resin composition of the present invention is preferably 1000 Pa·s or more at 30°C and more preferably 3000 Pa·s or more from the viewpoint of improving the handleability when a pre-preg is formed. Furthermore, 100000 Pa·s or less is preferable, and 80000 Pa·s or less is more preferable. The above-mentioned upper and lower limits can be combined arbitrarily. For example, 1000 to 100000 Pa·s is preferable and 3000 to 80000 Pa·s at 30°C is more preferable.

For the viscosity in the present invention, an object to be measured is sandwiched in the gap (0.5 mm) between two circular plates having the diameter of 25 mm, the upper and lower plates are twisted in the opposite direction at the angular frequency of 1.592 Hz and the load of 300 Pa while raising the temperature from 30°C, and a viscosity obtained from the strain stress thereof is used.

### <Constituent element (A)>

The constituent element (A) is a cyanate ester resin.

The cyanate ester resin represents a cyanate ester monomer, an oligomer, or a mixture thereof, and may have a substituent in the range of not impairing the effect of the present invention. Specific examples of the cyanate ester resin include bifunctional cyanate resins such as bisphenol A dicyanate, 4,4'-methylenebis(2,6-dimethylphenylcyanate), 4,4'-ethylidene diphenyl dicyanate, hexafluoro bisphenol A dicyanate, bis(4-cyanate-3,5-dimethylphenyl)methane, 1,3-bis(4-cyanatephenyl-1-(methylethylidene))benzene, bis(4-cyanatephenyl)thioether, and bis(4-cyanatephenyl)ether, polyfunctional cyanate resins derived from phenol novolac, cresol novolac, dicyclopentadiene structure-containing phenol resin, or the like, and prepolymers in which these cyanate resins are partially triazinized.

From the viewpoint of imparting heat resistance and imparting toughness by improving a crosslink density, it is preferable to comprise two or more cyanate groups in one molecule.

One type of the cyanate ester resin may be used alone, or two or more types thereof may be used in combination. It is also possible to appropriately mix two or more types having different degrees of polymerization.

The viscosity of the cyanate ester resin is preferably 1000 Pa·s or more at 30°C and more preferably 3000 Pa·s or more from the viewpoint of improving the handleability when the pre-preg is formed. Furthermore, 100000 Pa·s or less is preferable, and 80000 Pa·s or less is more preferable. The above-mentioned upper and lower limits can be combined arbitrarily. For example, 1000 to 100000 Pa·s is preferable at 30°C, and 3000 to 80000 Pa·s is more preferable.

Examples of commercially available cyanate ester resins include a bisphenol A type cyanate ester resin (MITSUBISHI GAS CHEMICAL COMPANY, INC., TA), a phenol novolac-type cyanate ester resin (Lonza Japan K.K., Primaset PT-30), a prepolymer of a bisphenol A dicyanate ester resin (MITSUBISHI GAS CHEMICAL COMPANY, INC., TA-500), an oligomer of a phenol novolac-type cyanate ester resin (Lonza Japan K.K., Primaset PT-60) a dicyclopentadiene-structure containing cyanate ester resin (Lonza Japan K.K., DT-7000).

As the constituent element (A), a bisphenol A type cyanate ester resin and a phenol novolac-type cyanate ester resin are preferable, and a phenol novolac-type cyanate ester resin is more preferable from the viewpoint of excellent heat resistance when the cured product is formed.

The content of the constituent element (A) is preferably 30 to 99 parts by mass, more preferably 60 to 97 parts by mass, and further preferably 80 to 97 parts by mass with respect to 100 parts by mass of the entire resin composition. By adding it to the lower limit value or more, sufficient heat resistance can be imparted to the cured product, and by adding it to the upper limit value or less, the toughness of the cured product can be secured.

### <Constituent element (B)>

The constituent element (B) is an imidazole compound.

Examples of the imidazole compound include 2-methylimidazole, 2-ethyl-4-methylimidazole, 2-undecylimidazole, 2-heptadecylimidazole, 1,2-dimethylimidazole, 2-phenylimidazole, 2-phenyl-4-methylimidazole, 1-benzyl-2-phenylimidazole, 1-benzyl-2-methylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 1-cyanoethyl-2-ethyl-4-methylimidazolium trimellitate, 1-cyanoethyl-2-undecylimidazolium trimellitate, 1-cyanoethyl-2-phenylimidazolium trimellitate, 2,4-diamino-6-(2'-methylimidazolyl-(1'))-ethyl-s-triazine, 2,4-diamino-6-(2'-undecylimidazolyl-(1'))-ethyl-s-triazine, 2,4-diamino-6-(2'-ethyl-4-methylimidazolyl-(1'))-ethyl-s-triazine, 2,4-diamino-6-(2'-methylimidazolyl-(1'))-ethyl-s-triazine-isocyanuric acid adduct, 2-phenylimidazole isocyanuric acid adduct, 2-methylimidazole isocyanuric acid adduct, 1-cyanoethyl-2-phenyl-4, 5-di(2-cyanoethoxy)methylimidazole, 2-phenyl-4,5-dihydroxymethylimidazole, and 2-phenyl-4-methyl-5-hydroxymethylimidazole.

One type of the imidazole compound may be used alone, or two or more types thereof may be used in combination.

Among the imidazole compounds, the imidazole compound having a substituent having a triazine ring is preferable, and the imidazole compound more preferably has a substituent having a 1,3,5-triazine (also simply referred to as triazine or s-triazine) ring in the nitrogen at the 1st position of the imidazole ring of the imidazole compound, because then the primary curability at 140°C or lower of the resin composition can be enhanced. The triazine ring and the imidazole ring may be directly bonded, but are preferably bonded by an alkylene group having 1 to 4 carbon atoms, and are more preferably bonded by an ethylene group. The substituent having a triazine ring preferably has an amino group at the 2nd and 4th positions of the triazine ring. The imidazole compound having a substituent having a triazine ring may be an adduct with isocyanuric acid.

As the imidazole compound having a substituent having a triazine ring, 2,4-diamino-6-[2'-methylimidazolyl-(1')]-ethyl-s-triazine, 2,4-diamino-6-[2'-undecylimidazolyl-(1')]-ethyl-s-triazine, 2,4-diamino-6-[2'-ethyl-4'-methylimidazolyl-(1')]-ethyl-s-triazine, and isocyanuric acid addition salts of 2,4-diamino-6-[2'-methylimidazolyl-(1')]-ethyl-S-triazine are preferable. From the viewpoint of an excellent balance between low-temperature curability and heat stability, 2,4-diamino-6-[2'-methylimidazolyl-(1')]-ethyl-s-triazine, and isocyanuric acid addition salts of 2,4-diamino-6-[2'-methylimidazolyl-(1')]-ethyl-s-triazine are more preferable. These are commercially available under the trade names of 2MZ-A, C11Z-A, 2E4MZ-A, and 2MA-OK (SHIKOKU CHEMICALS CORPORATION), for example.

The imidazole compound of the constituent element (B) is preferably contained in the resin composition as particles. Since it is contained in the resin composition as particles, it is present as a solid in the resin composition at a temperature lower than a specific temperature, which makes it difficult to act as a catalyst for a curing reaction, whereas it dissolves in the resin composition at a specific temperature or higher temperature, which makes it easy to promote a curing reaction. Therefore, it becomes easy to secure both heat stability and low-temperature curability.

The particle number average particle size of the imidazole compound of the constituent element (B) is preferably 1 to 15 µm, and more preferably 3 to 10 µm. By adding it to the lower limit value or more, it becomes easier to secure heat stability. By adding it to the upper limit value or less, it becomes easier to exhibit low-temperature curability. The imidazole compound, which has a substituent having a triazine ring, as particles is also available as 2MZA-PW (SHIKOKU CHEMICALS CORPORATION) or 2MAOK-PW (SHIKOKU CHEMICALS CORPORATION).

In the present specification, a laser diffraction/light scattering method is used for the particle number average particle size. A particle group is irradiated with a laser beam to obtain diffracted scattered light emitted from the particle group. By detecting and analyzing the light intensity distribution pattern drawn by the diffracted scattered light, it is possible to obtain what size of particles are contained in what proportion (particle size distribution). The number average particle size calculated from the result is defined as the particle number average particle size.

The content of the constituent element (B) is preferably 0.5 to 2 parts by mass, and more preferably 0.7 to 1 part by mass with respect to 100 parts by mass of the constituent element (A). By adding it to the lower limit value or more, sufficient primary curability can be exhibited even at 140°C or lower, and by adding it to the upper limit value or less, storage stability at room temperature can be favorably maintained.

### <Constituent element (C)>

The constituent element (C) is silica.

By using the constituent element (C) together with the constituent element (B), the solubility of the imidazole in the cyanate ester at the time of heating molding is enhanced. When the solubility is increased, curing at 140°C or lower is likely to proceed, and as a result, the cured product can be demolded without chipping or breaking after molding.

The constituent element (C) preferably has a hydrophilic group, and is more preferably hydrophilic silica. The hydrophilic group on the silica surface enhances the solubility of the imidazole in the cyanate ester, thereby contributing to the improvement of curability at 140°C or lower. Examples of the silica include wet-type silica and dry-type silica. Among these, dry-type fumed silica is preferable.

The specific surface area of the silica according to a BET method is preferably 200 m²/g or more, and more preferably 250 m²/g or more. 500 m²/g or less is preferable, and 400 m²/g or less is more preferable. By adding it to the lower limit value or more, curing at 140°C or lower is likely to proceed, and by adding it to the upper limit value or less, the solubility is not excessive, which makes it possible to prevent a deterioration of the storage stability of the resin composition at room temperature.

The above-mentioned upper and lower limits can be combined arbitrarily. For example, 200 to 500 m²/g is preferable, and 250 to 400 m²/g is more preferable.

The average particle size (average primary particle size) of the silica is preferably 400 nm or less, more preferably 300 nm or less, further preferably 80 nm or less, and particularly preferably 30 nm or less from the viewpoint of activating the imidazole or the cyanate ester. It is preferably 1 nm or more, more preferably 3 nm or more, and further preferably 5 nm or more because then the dispersibility of the silica in the resin composition is favorable.

The above-mentioned upper and lower limits can be combined arbitrarily. For example, 1 to 400 nm is preferable, 1 to 300 nm is more preferable, 3 to 80 nm is further preferable, and 5 to 30 nm is particularly preferable.

The average primary particle size can be confirmed by an electron microscope such as a scanning electron microscope (SEM) or a transmission electron microscope. When measuring the silica particle size in the cured product, a photograph of the surface of the cured product is taken using an electron microscope to measure the particle size of 100 or more. Thereby, the particle number average particle size of the particles is obtained from the arithmetic average. The maximum Feret's diameter is counted as the particle size. When measuring the silica particle size of the powder, it can also be measured by the laser diffraction/light scattering method.

One type of the silica may be used alone, or two or more types thereof may be used in combination. When two or more types are used in combination, one having a small particle size and one having a large particle size can be used in combination, for example.

The silica can be surface-treated with a silane coupling agent such as hexamethyldisilazane, trimethylsilane, and dimethyldichlorosilane, a silicone oil treatment agent such as silicone oil, dimethylsilicone oil, and modified silicone oil, and the like. Hexamethyldisilazane treatment is preferable from the viewpoint of enabling molding at 140°C or lower.

Examples of the hydrophilic fumed silica include AEROSIL 200, AEROSIL 255, AEROSIL 300, and AEROSIL 380 of Evonik Industries.

The content of the constituent element (C) is preferably 0.5 to 5 parts by mass, and more preferably 1 to 3 parts by mass with respect to 100 parts by mass of the constituent element (A). By adding it to the lower limit value or more, the primary curability at 140°C or lower can be improved. By adding it to the upper limit value or less, a deterioration in heat resistance of the cured product can be prevented, and also, a deterioration in the storage stability of the resin composition at room temperature can be prevented.

The relationship between the contents of the constituent element (B) and the constituent element (C) is preferably 0.5 to 10, and more preferably 1 to 4 as the mass ratio of the constituent element (B) and the constituent element (C) (mass of constituent element (C)/mass of constituent element (B)) from the viewpoint of promoting dissolution of the constituent element (B) into the constituent element (A).

### <Other components>

Other components can be added to the resin composition in the range not impairing the effects of the present invention.

Examples of the other components include resins such as thermoplastic resins, and additives such as fillers, solvents, pigments, and antioxidants.

When the resin composition of the present invention comprises the other component, the content of the other component may be 0.01 to 10 parts by mass with respect to 100 parts by mass of the constituent element (A).

The thermoplastic resin can be added for the purpose of improving the toughness of the cured product of the resin composition.

Examples of the thermoplastic resin include a phenoxy resin, polyvinyl formal, polyether sulfone, and polyetherimide. The thermoplastic resin may be added as fine particles, and examples thereof include fine particles of polyamide, polyimide, polyurethane, polyether sulfone, and polyester.

### <Mixing method>

A mixing method of each of the constituent elements of the resin composition to form the resin composition is not limited, but when mixing particles as the constituent elements, the dispersion state of the particles can be made uniform by mixing the particles and a liquid constituent element are mixed in an appropriate ratio, and previously producing a masterbatch that has been sufficiently kneaded with three rolls or the like to be added to the other constituent elements later.

### <Usage>

The usage of the resin composition is not particularly limited, but it can be applied as a matrix resin for a fiber-reinforced composite material or an adhesive for a structural material, for example, and can be particularly and suitably used as a matrix resin for a fiber-reinforced composite material.

### <Reinforcing fiber>

A reinforcing fiber substrate when molding the fiber-reinforced composite material is not particularly limited, but all of those which are used as reinforcing fiber substrates of fiber-reinforced composite materials such as carbon fibers, glass fibers, aramid fibers, alumina fibers, and silicon nitride fibers can be used. Carbon fibers are particularly preferable used because they have excellent specific strength and specific elastic modulus. Furthermore, the form of the reinforcing fiber substrate is not particularly limited, and for example, a unidirectional material, a cloth, a mat, or a tow made of several thousand or more filaments can be used.

### <Pre-preg>

A pre-preg can be formed by impregnating the reinforcing fiber substrate with the resin composition.

The pre-preg comprises carbon fibers, and the resin composition of the present invention. The pre-preg of the present invention can be manufactured by a known method using the resin composition of the present invention and the carbon fibers. As a manufacturing method of the pre-preg using the resin composition of the present invention, a hot melting method is preferable. When impregnating with the resin composition at the time of manufacturing the pre-preg by the hot melting method, the temperature of an impregnation roll and a heater is preferably 130°C or lower, and more preferably 120°C or lower because then the storage stability of the pre-preg to be manufactured is secured.

The content of the resin composition in the pre-preg is preferably 15% to 50% by mass, and more preferably 20% to 45% by mass. By adding it to the lower limit value or more, the mechanical strength when formed into the fiber-reinforced composite material can be exhibited, and by adding it to the upper limit value or less, the mechanical strength when formed into the fiber-reinforced composite material can be increased.

The fiber basis weight of the pre-preg (content of reinforcing fibers per 1 m²: FAW) may be appropriately set according to the usage of the pre-preg, and it is preferably 10 to 1000 g/m² from the viewpoint of work efficiency, and it is more preferably 50 to 300 g/m² from the viewpoint of an impregnating ability of the resin, drape properties, and handleability.

### [Examples]

Hereinafter, the present invention will be specifically described with reference to examples, but the present invention is not construed as being limited to the following aspects.

Resin raw materials used in the examples are described below.

### (Constituent element (A))

PT-30: a phenol novolac-type cyanate ester resin (Lonza K.K, trade name "Primaset PT-30")
PT-60: an oligomer of a phenol novolac-type cyanate ester resin (Lonza K.K, trade name "Primaset PT-60")

### (Constituent element (B))

2MZA-PW: 2,4-diamino-6-[2'-methylimidazolyl-(1')]-ethyl-s-triazine (SHIKOKU CHEMICALS CORPORATION, trade name "2MZA-PW")
2PHZ-PW: 2-phenyl-4,5-dihydroxymethylimidazole (SHIKOKU CHEMICALS CORPORATION, trade name "2PHZ-PW")

### (Constituent element (C))

AEROSIL 380: hydrophilic fumed silica (Evonik Industries, specific surface area 380 ± 30 m²/g, average particle size 6 nm, HDMS treatment)

### (Other components)

### (Evaluation of storage stability)

The storage stability of the resin compositions prepared in each example and comparative example was evaluated by the following method.

The prepared resin composition was stored in a room set at 23°C and the relative humidity of 50%, and the glass transition temperature (Tg) was measured every week by the following method to record an elapsed week when Tg rose by 14°C from the initial value (storage days 0 days).
Equipment: DSC250 (manufactured by TA Instruments)
Measurement temperature range: -50°C to 100°C
Temperature rising rate: 10°C/minute

### (Evaluation of reaction start temperature DSC Onset value)

For the resin compositions prepared in each example and comparative example, the reaction start temperature (DSC Onset value) was evaluated by the following method.
Equipment: DSC250 (manufactured by TA Instruments)
Measurement temperature range: -50°C to 400°C
Temperature rising rate: 10°C/minute

The temperature at the intersection of the tangent of the flat portion and the tangent of the rising portion of a reaction exothermic peak was defined as the Onset value.

### (Production of resin plate)

The resin composition prepared in each example and comparative example was injected into a gap in which a 2 mm-thick polytetrafluoroethylene (PTFE) spacer was sandwiched between two 4 mm-thick glass plates that had been subjected to a mold release treatment, and heated at 135°C for 120 minutes to obtain a primary cured resin plate. The primary cured resin plate was removed from the glass plates and heated at 250°C for 120 minutes in a free stand state to obtain a secondary cured resin plate.

### (Evaluation of demoldability)

The state when the resin plate primarily cured at 135°C for 120 minutes was removed from the glass plates was evaluated in the following three stages of A, B, and C.
A: there was no problem, or could be removed if handled carefully.
B: even with careful handling, some chips and breakage occurred.
C: could not be removed

### (Measurement of glass transition temperature of cured product)

A test piece having the length: 55 mm, the width: 12.7 mm, and the thickness: 2 mm was cut out from the resin plates of each of the primary cured resin plate and the secondary cured resin plate. The storage elastic modulus E' was measured in bending mode using a dynamic viscoelasticity measurement device (DMA Q-800, manufactured by TA Instruments) under the conditions of frequency: 1 Hz, strain: 0.02%, and temperature rising rate: 5°C/min. A logE' was plotted with respect to the temperature, and the temperature obtained from the intersection of the approximate straight line of the flat region before the transition of the logE' and the tangent at the inflection point of the slope in the region to which the logE' was transferred was defined as the glass transition temperature.

### <Preparation of resin composition>

### (Example 1)

PT-30 and 2MZA-PW were mixed at the mass ratio of 2:1 and uniformly dispersed using three rolls to obtain a paste-like masterbatch (α).

PT-60, PT-30, the masterbatch (α), and AEROSIL 380 were weighed in a flask such that the ratio was as shown in Table 1, and were uniformly stirred and mixed at 65°C to obtain a resin composition 1.

The obtained resin composition 1 was evaluated. The evaluation results are shown in Table 1.

### (Examples 2 to 4)

Resin compositions were prepared in the same procedure as in Example 1 except that the compounding ratio was changed as shown in Table 1. Thereby, resin compositions 2 to 4 were obtained. The evaluation results of the obtained resin compositions 2 to 4 are shown in Table 1.

### (Comparative Examples 1 to 3)

Resin compositions were prepared in the same procedure as in Example 1 except that the compounding ratio was changed as shown in Table 1. Thereby, resin compositions 5 to 7 were obtained. The evaluation results of the obtained resin compositions 5 to 7 are shown in Table 1.

**[Table 1]**

| | | Examples | | | | Comparative Examples | | |
|---|---|---|---|---|---|---|---|---|
| | | 1 | 2 | 3 | 4 | 1 | 2 | 3 |
| Constituent element (A) | PT-30 | 70 | 50 | 100 | 100 | 100 | 100 | 100 |
| | PT-60 | 30 | 50 | 0 | 0 | 0 | 0 | 0 |
| Constituent | 2MZA-PW | 1 | 1 | 1 | 1 | 1 | 0 | 0 |
| element (B) | 2PHZ-PW | 0 | 0 | 0 | 0 | 0 | 0 | 1 |
| Constituent element (C) | AEROSIL 380 | 2.5 | 2.5 | 2.5 | 5 | 0 | 10 | 0 |
| Reaction start temperature DSC Onset [°C] | | 170 | 171 | 169 | 147 | 194 | 206 | 212 |
| Storage stability [week] | | >4 | >4 | >4 | 4 | >4 | >4 | >4 |
| Demoldability after primary curing at 135°C × 2 hrs | | A | A | A | A | B | C | C |
| DMA after secondary curing at 250°C × 2 hrs E'-Tg [°C] | | 404 | 406 | 375 | 394 | 400 | Could not be measured | Could not be measured |

In the examples, the primary curability was at 140°C or lower and heat stability was also favorable, and the heat resistance after the secondary curing was 370°C or higher, which was also favorable. Furthermore, as described in Example 5 to be described later, a pre-preg manufactured using the resin composition of the present invention also had low-temperature curability and favorable heat resistance of a cured product.

On the other hand, the resin composition obtained in the comparative example was inferior in demoldability after the primary curing at 135°C × 2 hours.

### (Example 5)

Using a comma coater, the resin composition prepared in Example 2 was uniformly applied onto a release paper such that the resin basis weight was 35.2 g/m² to form a resin film. Then, carbon fibers (manufactured by Mitsubishi Chemical Corporation, product name: TR50S-15L) were wrapped on this resin film (the surface of the release paper on the resin film forming side) with a drum wind device such that the fiber basis weight was a sheet of 125 g/m². Furthermore, another sheet of the resin film was bonded onto the carbon fiber sheet on the drum wind device. The carbon fiber sheet sandwiched between the two release paper papers and the resin film was heated and pressurized with a roller at 100°C and the linear pressure of 0.2 MPa to impregnate the carbon fiber sheet with an epoxy resin composition to produce a pre-preg in which the fiber basis weight was 125 g/m² and the resin content was 36% by mass.

Then, the obtained pre-preg was cut into the length 300 mm × 300 mm. 16 sheets were laminated in along the fiber alignment direction, put in a bag, and heated at 135°C for 2 hours in an autoclave to produce a primary cured molded plate (fiber-reinforced composite material). The fiber-reinforced composite material taken out from the bag was heated at 250°C for 2 hours in an oven to perform secondary curing. The glass transition point of the secondary cured product was measured according to the method described in (Measurement of glass transition point of cured product).

The evaluation results are shown in Table 2.

**[Table 2]**

| | | Example |
|---|---|---|
| | | 5 |
| Constituent element (A) | PT-30 | 50 |
| | PT-60 | 50 |
| Constituent element (B) | 2MZA-PW | 1 |
| Constituent element (C) | AEROSIL 380 | 2.5 |
| Carbon fiber | TR50S-15L | Used |
| Resin content | | 36% |
| Storage stability [week] | | > 4 |
| Demoldability after primary curing at 135°C × 2 hrs | | A |
| DMA after secondary curing at 250°C × 2 hrs | | 403 |
| E'-Tg [°C] | | |

The resin composition of the present invention becomes a cured product which has excellent storage stability at room temperature while having excellent primary curability at 140°C or lower, and which has excellent heat resistance by secondarily curing, at a high temperature, the cured product that has been primarily cured at a low temperature. Furthermore, the pre-preg of the present invention becomes a fiber-reinforced composite material which has an appropriate tack at room temperature and has excellent primary curability at 140°C or lower, or which has excellent heat resistance and mechanical strength by secondarily curing, at a high temperature, the cured product that has been primarily cured at a low temperature. The resin composition and the pre-preg of the present invention are suitably used in fields, in which heat resistance is required, such as aircraft members, automobile members, bicycle members, railway vehicle members, and ship members.

## Claims

1. A resin composition comprising:
the following constituent element (A); constituent element (B); and constituent element (C),
wherein an average particle size of silica of the constituent element (C) is 0.4 µm or less,
the constituent element (A): a cyanate ester resin,
the constituent element (B): an imidazole compound, and
the constituent element (C): silica.

2. The resin composition according to Claim 1, wherein the constituent element (A) comprises a cyanate ester resin having two or more cyanate groups in one molecule.

3. The resin composition according to Claim 1 or 2, wherein the constituent element (B) comprises an imidazole compound having a substituent having a triazine ring.

4. The resin composition according to any one of Claims 1 to 3, wherein the constituent element (C) comprises hydrophilic silica.

5. The resin composition according to any one of Claims 1 to 4, wherein a content of the constituent element (B) is 0.7 to 1 part by mass with respect to 100 parts by mass of the constituent element (A).

6. The resin composition according to any one of Claims 1 to 5, wherein a content of the constituent element (C) is 0.5 to 5 parts by mass with respect to 100 parts by mass of the constituent element (A).

7. The resin composition according to any one of Claims 1 to 6, wherein the constituent element (A) comprises a novolac-type cyanate ester resin.

8. The resin composition according to any one of Claims 1 to 7, wherein a specific surface area of the constituent element (C) is 200 m²/g or more.

9. The resin composition according to any one of Claims 1 to 8, wherein an E'onset value of DMA measured according to ASTM D7028 is 370°C or higher.

10. The resin composition according to any one of Claims 1 to 9, wherein the constituent element (C) comprises fumed silica.

11. The resin composition according to any one of Claims 1 to 10, wherein the constituent element (B) comprises 2,4-diamino-6-[2'-methylimidazolyl-(1')]-ethyl-s-triazine, or an isocyanuric acid addition salt of 2,4-diamino-6-[2'-methylimidazolyl-(1')]-ethyl-s-triazine.

12. The resin composition according to any one of Claims 1 to 11, wherein the constituent element (C) comprises hexamethyldisilazane-treated silica.

13. The resin composition according to any one of Claims 1 to 12, wherein the constituent element (C) comprises silica having an average particle size of 0.001 µm or more.

14. The resin composition according to any one of Claims 1 to 13, wherein a mass ratio of the constituent element (B) and the constituent element (C) (mass of constituent element (C)/mass of constituent element (B)) is 0.5 to 10.

15. A pre-preg comprising:
carbon fibers; and
the resin composition according to any one of Claims 1 to 14.

16. A molded article comprising:
carbon fibers; and
a cured product of the resin composition according to any one of Claims 1 to 14.

17. A method for manufacturing a pre-preg, the method comprising:
impregnating a carbon fiber substrate with a resin composition,
wherein the resin composition comprises the following constituent element (A), constituent element (B), and constituent element (C), and
an average particle size of silica of the constituent element (C) is 0.4 µm or less,
the constituent element (A): a cyanate ester resin,
the constituent element (B): an imidazole compound, and
the constituent element (C): silica.

18. The pre-preg manufacturing method according to Claim 17, wherein the constituent element (B) comprises an imidazole compound having a substituent having a triazine ring.

19. A resin composition comprising:
the following constituent element (A); constituent element (B); and constituent element (C),
wherein a specific surface area of silica of the constituent element (C) is 200 m²/g or more,
the constituent element (A): a cyanate ester resin,
the constituent element (B): an imidazole compound, and
the constituent element (C): silica.

20. The resin composition according to Claim 19, wherein the specific surface area of the silica of the constituent element (C) is 500 m²/g or less.
